# EUROPÄISCHE PATENTSCHRIFT

(11) **EP 2 715 013 B1**
(45) Veröffentlichungstag und Bekanntmachung des Hinweises auf die Patenterteilung: **09.01.2019**
(21) Anmeldenummer: 12724137.0
(22) Anmeldetag: 25.05.2012
(51) Int. Cl.: E04G 23/02, E04C 5/06, F16B 13/00, F16B 25/00

(54) **VERBINDUNGSANORDNUNG UND VERFAHREN ZUR HERSTELLUNG EINER DURCHSTANZSICHERUNG EINER NACHTRÄGLICHEN QUERKRAFTVERSTÄRKUNG BZW. EINES BEWEHRUNGSANSCHLUSSES**
CONNECTING ARRANGEMENT AND METHOD FOR PRODUCING A PUNCHING SHEAR REINFORCEMENT, A SUBSEQUENT LATERAL-FORCE REINFORCEMENT AND/OR A REINFORCEMENT CONNECTION
ENSEMBLE D'ASSEMBLAGE ET PROCÉDÉ DE PRODUCTION D'UNE CONSOLIDATION CONTRE LA PERFORATION, D'UN RENFORT DE FORCE TRANSVERSALE SUPPLÉMENTAIRE OU D'UN RACCORDEMENT D'ARMATURE

(30) Priorität: 30.05.2011 DE 102011102825
(43) Veröffentlichungstag der Anmeldung: 09.04.2014
(73) Patentinhaber: Prof. Feix Research&Development Gmbh&Co. Kg, 6094 Axains (AT)
(72) Erfinder: FEIX, Jürgen, A-6091 Götzens (AT); WÖRLE, Patrick, A-6600 Pflach (AT)
(74) Vertreter: Rau, Schneck & Hübner Patentanwälte Rechtsanwälte PartGmbB
(86) Internationale Anmeldenummer: PCT/EP2012/059903
(87) Internationale Veröffentlichungsnummer: WO 2012/163856

(56) Entgegenhaltungen:
- EP-A1- 1 690 992
- EP-A1- 1 710 453
- EP-A2- 1 905 923
- DE-A1-102009 039 337
- US-A- 4 883 396
- US-A1- 2007 175 127

## Beschreibung

Die vorliegende Erfindung betrifft eine Verbindungsanordnung zum Koppeln eines ersten und zweiten Bereichs aus porösem Werkstoff, insbesondere ein Betonwerkstoff, mit einem Ankerelement.

So eine Verbindungsanordnung kann z. B. als Durchstanzsicherung dienen, welche die Belastbarkeit einer auf Stützen angeordneten Flachdecke erhöht, die meist als armierte Betonplatten ausgebildet ist. Sie kann aber auch dazu dienen, eine nachträgliche Querkraftverstärkung an bestehenden Bauwerken und Bauteilen, wie z. B. Platten oder Balken, zu realisieren.

Insbesondere tritt in letzter Zeit in der Hochbaupraxis zunehmend das Problem auf, dass bei bestehenden Bauteilen, insbesondere bei Flachdecken, die vorhandenen rechnerischen Durchstanzwiderstände nicht mehr ausreichen, um neuen Belastungssituationen standzuhalten, die durch höhere Belastungsannahmen, aber auch aufgrund geänderter Normen und Vorschriften auftreten.

Für eine nachträgliche Querkraftverstärkung bestehender Bauwerke und deren Bauteile gibt es kein bewährtes bauaufsichtlich zugelassenes Verfahren. Eine Querkraftverstärkung für eine Wand ist aus der US 2007/0175127 A1 bekannt.

Es gibt mehrere konstruktive Maßnahmen, um bei bereits vorhandenen Decken den Durchstanzwiderstand zu erhöhen. Dabei können zum Beispiel nachträglich angeordnete Konsolenelemente dazu dienen, die Krafteinleitung im Stützenbereich besser zu verteilen und so das Durchstanzrisiko zu minimieren. Ein anderer Ansatz besteht darin, bei bestehenden Flachdecken nachträglich im Stützenbereich eine Durchstanzbewehrung anzubringen, indem die Decke vollständig durchsetzende, vorgespannte Ankerstäbe eingebracht werden. Dies ist bei vorhandenen Gebäuden "im Betrieb" schwierig, da sowohl die Deckenunterseite als auch der darüberliegende Fußbodenbereich frei zugänglich sein muss, und im Falle von herausstehenden Vorspannelementen nach der Baumassnahme nur noch eingeschränkt nutzbar ist.

Ein weiteres praktiziertes Verfahren besteht darin, Ankerelemente von der Deckenunterseite aus in entsprechend eingebrachte Bohrungen im Stützenbereich einzukleben bzw. einzumörteln, um die für den Durchstanzschadensfall maßgebliche Schubtragfähigkeit zu erhöhen. Ein dafür geeigneter Ankerstab ist beispielsweise aus der EP 1 905 923 A2 bekannt. Dieses Dokument offenbart alle technischen Merkmale des Oberbegriffs des Anspruchs 1. Bei diesem Verfahren besteht ein Problem darin, dass das Einbringen und Zentrieren dieser Ankerstäbe relativ aufwendig ist. Geeignete aushärtbare Massen erfordern eine sorgfältige Vorbehandlung der Bohrung (Reinigung), haben eine begrenzte Standzeit und benötigen unter Umständen relativ lange Aushärtezeiten, bis sie ihre Endfestigkeit erreicht haben. Ein weiteres Problem kann darin bestehen, dass die Festigkeit solcher sogenannten "Kleber" ab ca. 60° stark abnimmt und so die Verstärkungswirkung im Brandfall erheblich reduziert sein kann.

Um Lasten in Betonbauteilen zu verankern, sind seit mehreren Jahren sogenannte Betonschrauben bekannt, die gegenüber der Verankerung von Schrauben mit Hilfe von Dübeln sehr hohe Tragfestigkeiten aufweisen. Solche Betonschrauben oder Betonanker sind beispielsweise aus der DE 198 46 993 A1 sowie der EP 1 710 453 A1 bekannt. Diese sind mit einem selbstschneidenden Gewinde versehen und können direkt in ein Betonloch eingeschraubt werden. Solche Schrauben bzw. Anker sind dazu vorsehen, Gegenstände - also äußere Lasten - in einem porösen Bauteil zu verankern. Sie sind nicht dazu vorgesehen, poröse Bauteile - also z. B. Betonbauteile wie Deckenplatten - zu verstärken.

Eine Aufgabe der vorliegenden Erfindung besteht darin, eine Verbindungsanordnung zum Verstärken eines porösen Werkstoffs, ggf. zum Koppeln eines ersten und zweiten Bereichs desselben (z. B. ein Betonwerkstoff) bereitzustellen, bei der die oben genannten Nachteile wenigstens teilweise ausgeräumt sind.

Diese Aufgabe löst die Verbindungsanordnung gemäß Anspruch 1. Es ist ein stabförmiges Ankerelement vorgesehen sein, das an seinem vorderen Ende (vorne bezeichnet hier das in den Werkstoff hineinragende Ende) in eine im ersten Bereich verlaufende (und den zweiten Bereich durchdringende) Bohrung mittels eine selbstschneidende Außengewinde eingeschraubt ist. An seinem hinteren Ende hat das Ankerelement einen Anschlussabschnitt, der mit einer daran fixierbaren Koppeleinrichtung versehen ist, welche am zweiten Bereich angreift und ggf. auf diesen eine Kraft ausübt, und diesen zweiten Bereich so über einen zwischen dem Gewindeabschnitt (vorne) und dem Anschlussabschnitt (hinten) verlaufenden Schaftabschnitt mit dem ersten Bereich koppelt, wobei der Gewindeabschnitt vollständig in der Bohrung im ersten Bereich verläuft. Damit fügt der Anschlussabschnitt die Koppeleinrichtung an den Gewindeabschnitt und koppelt so den ersten mit dem zweiten Bereich. So werden Bereiche eines porösen Werkstoffs aneinander gekoppelt und ein Bauteil aus einem solchen Werkstoff wird insgesamt verstärkt.

Die Verbindungsanordnung weist dabei im Anschlussabschnitt ein Außengewinde auf und die Koppeleinrichtung ist als ein zum Außengewinde passendes Spannmutter ausgebildet. Das Gewinde kann beispielsweise ein metrisches ISO-Gewinde sein, welches auf einfache Weise die Spannmutter verstellbar an den zweiten Bereich koppeln kann. In einer anderen Ausführung ist es auch möglich, anstatt des Außengewindes im Anschlussabschnitt ein Innengewinde vorzusehen und zur Kopplung ein zu diesem Gewinde passendes Schraubelement mit entsprechend gestaltetem Schraubenkopf vorzusehen.

Es gibt auch Ausführungen, bei denen im Bereich des Anschlussabschnitts am hinteren Ende ein Drehmomentübertragungsmittel vorgesehen ist, das beispielsweise als Mehrkantkopf mit außen liegenden Angriffswangen ausgebildet ist, und zum Einschrauben des Ankerelements nutzbar ist.

Erfindungsgemäß, ist der Gewindeabschnitt am vorderen Ende als selbstschneidendes Außengewinde ausgebildet. Dies hat den Vorteil, dass das Ankerelement ohne weitere Vorarbeiten direkt in das gegebenenfalls gereinigte Bohrloch eingeschraubt werden kann, ohne dass dieses vorher in einem zusätzlichen Arbeitsgang mit einem entsprechenden Gewinde versehen werden müsste.

Es gibt auch Ausführungen, bei denen das selbstschneidende Gewinde, Schneidelemente mit erhöhter Festigkeit aufweist, und so ohne merklichen Verschleiß der Schneidgeometrie auch große Einschraublängen überbrückbar sind.

Eine nicht zur Erfindung gehörende Ausführung betrifft eine Verbindungsanordnung, die speziell als Durchstanzsicherung geeignet ist. Dabei verlaufen der erste und zweite Bereich in einer auf einer Stütze ruhenden Betonplatte. Der erste Bereich ist dabei als Kegel bzw. pyramidenstumpfartiger Sockel ausgebildet, der sich von der Anschlusskontur der Stütze erweiternd durch die Platte (z. B. eine Betondecke) erstreckt. Der Verlauf dieses Sockels, der im unbeschädigten Werkstoff nicht unbedingt erkennbar sein muss, entspricht etwa dem sogenannten Bruch- oder Stanzkegel, der bei einer Überlastung, dem sogenannten Durchstanzen, der Platte entstehen würde. Der zweite Bereich wird dabei durch den diesen Sockel umgebenden Bereich gebildet. Bei umgekehrt eingesetzten Ankerelementen bezeichnet der "zweite Bereich" den Sockel und der "erste Bereich" den den Sockel umgebenden Bereich.

Zur Verstärkung werden mehrere Ankerelemente kranz- oder strahlenförmig um die Stütze herum angeordnet, so dass deren Gewindeabschnitte im Sockel verlaufen und ggf. bis in den Bereich einer in der oberen Ebene der Platte angeordneten Zugarmierung. Dabei drücken die Koppeleinrichtungen den zweiten Bereich über eine zwischen Gewindeabschnitt und Anschlussabschnitt aufgebaute Zugspannung, die über die Koppeleinrichtung einstellbar ist, an den Sockel (erster Bereich) und erhöhen so die Schubfestigkeit der Platte in dieser Zone, so dass der Durchstanzwiderstand erhöht ist.

Dabei können die Ankerelemente senkrecht zur Plattenebene verlaufen (und die Armierungen im oberen und unteren Bereich verbinden) oder in einer anderen Ausführung die (virtuelle) Mantelfläche des Sockels senkrecht durchsetzen, wobei diese Mantelfläche bei einem Betonwerkstoff typischerweise einen Winkel von 30 bis 50° zur Plattenebene bildet.

Die Ankerelemente bilden hier eine den Sockel erfassende und diesen umgebende verstärkte Zone in Gestalt eines dreidimensionalen Fachwerks aus Druck- und Zugstreben, welche gleichzeitig die Armierungen im oberen und unteren Bereich miteinander koppeln. Dabei steigt in diesem Bereich die Schubbeanspruchbarkeit der Platte erheblich. Gleichzeitig wird der kegelstumpfförmige Schubflächenbereich nach außen verlagert und damit vergrößert. Der Versagensmechanismus bleibt zwar im Prinzip der gleiche, aber die erforderlichen Schadenslasten/Versagenslasten sind deutlich erhöht, da die wirksame Schubfläche durch die erhöhten Grenzdurchmesser nach außen verlagert und entsprechend vergrößert wird.

Eine nicht zur Erfindung gehörende Ausführung der Verbindungsanordnung dient als Bewehrungsanschluss zwischen dem ersten und zweiten Bereich. Der erste Bereich ist als erstes armiertes Betonbauteil ausgebildet, in dem der Gewindeabschnitt des Ankerelements parallel zu einem ersten Armierungselement verläuft, so dass Betriebslasten, insbesondere Zuglasten, zwischen dem Armierungselement und dem Gewindeabschnitt und damit dem Ankerelement übertragbar sind. Die Koppeleinrichtung ist dabei als ein Armierungsstück ausgebildet und verläuft innerhalb des zweiten Bereichs. Sie ist dort in eine diesen zweiten Bereich bildende Betonstruktur eines zweiten armierten Betonbauteils eingeformt. Das Armierungsstück verläuft parallel zu einem zweiten Armierungselement, so dass auch dort Betriebslasten, und zwar auch hier insbesondere Zuglasten, zwischen dem Armierungsstück (Koppeleinrichtung) und dem zweiten Armierungselement übertragbar sind. Damit bildet die Verbindungsanordnung mit dem Ankerelement und dem daran gekoppelten Armierungsstück einen Bewehrungsanschluss zwischen dem ersten Armierungselement im ersten Bereich und dem zweiten Armierungselement im zweiten Bereich.

In einer nicht zur Erfindung gehörenden Ausführung sind dabei an der Koppeleinrichtung (an ihrem dem Ankerelement zugewandten Ende) und dem Anschlussabschnitt des Ankerelements selbst entsprechende Außengewinde vorgesehen, so dass Koppeleinrichtung und Ankerelement z. B. über eine Gewindehülse miteinander koppelbar sind.

Es gibt auch Ausführungen, bei denen im Anschlussabschnitt des Ankerelements ein Innengewinde ausgebildet ist, in das ein entsprechendes Außengewinde der Koppeleinrichtung einschraubbar ist. In einer anderen Anordnung sind ein Außengewinde am Ankerelement und ein entsprechendes Innengewinde an der Koppeleinrichtung ausgebildet. Bei weiteren Ausführungen können zur besseren Handhabung auch Drehmomentübertragungsmittel, insbesondere Mehrkantprofile an der Gewindehülse bzw. an der Koppeleinrichtung vorgesehen sein. Es gibt auch Ausführungen, bei denen zwischen dem Gewindeabschnitt und dem Anschlussabschnitt ein Mehrkantprofil (z. B. Sechskantprofil) vorgesehen ist, das gleichzeitig als Anschlag dienen kann und die Einschraubtiefe begrenzt.

Bei einem Verfahren zur Herstellung einer Durchstanzsicherung unter Verwendung einer erfindungsgemäßen Verbindungsanordnung wird eine Bohrung in den ersten und zweiten Bereich eingebracht, das Ankerelement so in die Bohrung eingeschraubt, dass der Gewindeabschnitt vollständig im ersten Bereich (also beispielsweise im Sockel) verläuft.

In einer erfindungsgemäßen Ausführung verlaufen der erste und zweite Bereich in einem Betonquerschnitt, wobei der erste Bereich und der zweite Bereich zwei parallel verlaufende aneinander grenzende Zonen (je nach Belastung: Zug oder Druckzone) des Betonquerschnitts bilden. Mehrere Ankerelemente sind im Betonquerschnitt angeordnet. Die Gewindeabschnitte verlaufen im ersten Bereich und die Koppeleinrichtungen drücken den zweiten Bereich über eine Zugspannung, die im Ankerelement zwischen Gewindeabschnitt und Anschlussabschnitt verläuft und über die Koppeleinrichtung einstellbar ist, an den ersten Bereich. So ein Ankerelement baut Hauptzugspannungen in der Betonmatrix ab und erhöht so die Querkraftfestigkeit des Betonquerschnitts bzw. wirkt bei Rissbildung im Querschnitt als Querkraftbewehrung. Der erste und zweite Bereich entsprechen jeweils einer Zug- bzw. Druckzone, die über die Ankerelemente miteinander verbunden werden. Durch die Ankerelemente stellt sich das Tragverhalten eines schub- oder querkraftbewehrten Querschnitts ein.

In einer weiteren nicht erfindungsgemäßen Ausführung ist das Ankerelement mit dem ersten und zweiten Bereich zusätzlich über ein in der Bohrung angeordneten Verfüllmaterial miteinander gekoppelt. Damit lässt sich das Tragverhalten der Verbindungsanordnung weiter verbessern.

Bei einem Verfahren zur Herstellung einer Durchstanzsicherung bzw. einer Querkraftbewehrung wird eine Bohrung in den ersten und zweiten Bereich eingebracht, das Ankerelement so in die Bohrung eingeschraubt, dass der Gewindeabschnitt vollständig im ersten Bereich (also beispielsweise im Sockel) verläuft. Weiterhin wird die Koppeleinrichtung am Anschlussabschnitt angebracht, in dem insbesondere eine Spannmutter aufgeschraubt wird, um eine Zugspannung im Ankerelement zwischen Gewindeabschnitt und Anschlussabschnitt aufzubauen, welche den ersten Bereich und den zweiten Bereich aneinander drückt.

Ein anderes Verfahren dient zur Herstellung eines Bewehrungsanschlusses unter Verwendung einer erfindungsgemäßen Verbindungsanordnung. Dabei wird ebenfalls eine Bohrung in den ersten Bereich (zum Beispiel in ein erstes armiertes Betonbauteil) eingebracht, das Ankerelement wird vollständig mit seinem Gewindeabschnitt in den ersten Bereich eingeschraubt. Eine Koppeleinrichtung insbesondere ein Armierstück wird am Anschlussabschnitt des Ankerelements angebracht und der Koppelbereich (das Armierstück) wird im Beton eingeformt bzw. von einer Betonmasse umformt, und der zweite Bereich (z. B. ein zweites armiertes Betonbauteil) wird durch Aushärten der Betonmasse ausgebildet.

Nachfolgend werden ein Ausführungsbeispiel und weitere Aspekte der Erfindung anhand der Zeichnungen erläutert. Darin zeigen:
- Fig. 1: eine Schnittdarstellung einer nicht erfindungsgemäßen Verbindungsanordnung mit zwei alternativen Anordnungsrichtungen von Ankerelementen,
- Fig. 2: eine schematische Ansicht von unten der Verbindungsanordnung aus Fig. 1 mit zwei unterschiedlichen Anordnungsschemata der Ankerelemente,
- Fig. 3: eine Darstellung des Details A aus Fig. 1,
- Fig. 4: eine Ansicht eines Ankerelements zur Verwendung in der Verbindungsanordnung gemäß Fig. 1, Fig. 2 oder Fig. 3,
- Fig. 5: eine Schnittdarstellung einer nicht erfindungsgemäßen Verbindungsanordnung im Montagezustand,
- Fig. 6: die Verbindungsanordnung aus Fig. 5 in fertig ausgeführtem Zustand,
- Fig. 7: einen Verfahrensablauf zur Herstellung einer Verbindungsanordnung gemäß Fig. 1 bis Fig. 3,
- Fig. 8: einen Verfahrensablauf zur Herstellung einer Verbindungsanordnung gemäß Fig. 5 und Fig. 6,
- Fig. 9: eine Darstellung einer erfindungsgemäßen Verbindungsanordnung (Querschnittdetail einer Plattenbrücke), die als Querkraftverstärkung dient,
- Fig. 10: eine Längsdarstellung der Verbindungsanordnung aus Fig. 9, und
- Fig. 11: eine weitere Darstellung einer erfindungsgemäßen Verbindungsanordnung (Querkraftverstärkung an einem Plattenbalken).

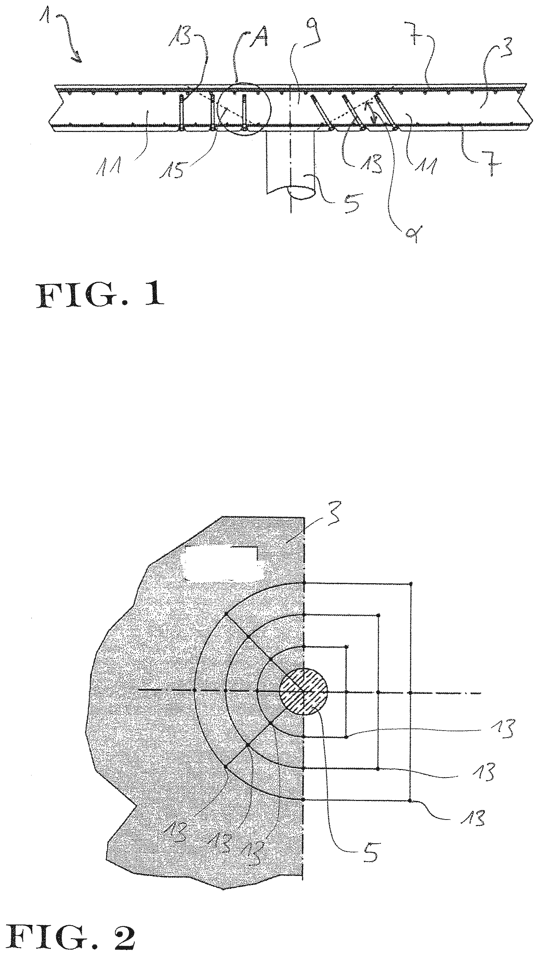

Eine nicht erfindungsgemäße Verbindungsanordnung wird nachfolgend anhand der Fig. 1 bis 4 erläutert. Fig. 1 zeigt einen Ausschnitt aus einer Deckenkonstruktion 1, bei der eine die Decke bildende Betonplatte 3 auf mehreren Stützen 5 ruht, von denen eine dargestellt ist. Die Betonplatte 3 ist jeweils im Bereich ihrer Unter- und Oberseite mit einer Bewehrung 7 versehen, um in diesen Bereichen auftretende Zugspannungen aufzunehmen.

Bei der unmittelbaren Auflagerung der Betonplatte 3 entsteht oberhalb des Säulenkopfes in der Platte ein räumlich hochbeanspruchter erster Bereich 9, der sich kegelstumpfartig erweiternd von der Stützenkontur ausgehend durch die Betonplatte 3 erstreckt. Die hohen Belastungen entstehen in der Platte 3 als Folge der konzentrierten Einleitung von Auflagerkräften im Bereich der Stütze 5, die in der Betonplatte 3 negative Biegemomente und Querkräfte verursachen. Werden diese Beanspruchungen zu groß, so dringt die Stütze 5 durch die Betonplatte 3 hindurch und stanzt den ersten Bereich 9 aus der Betonplatte heraus. Der erste Bereich 9 wird von einem zweiten Bereich 11 umgeben, der durch den außerhalb der ersten Bereiche 9 liegenden Bereich 11 der Betonplatte 3 gebildet wird.

Um den Durchstanzwiderstand zu erhöhen, sind mehrere Ankerelemente 13 vorgesehen, welche den Durchstanzwiderstand erhöhen, indem sie den ersten Bereich 9 mit dem zweiten Bereich 11 verbinden. Die aus ersten und zweiten Bereich 9, 11 und Ankerelement 13 so gebildete Verbindungsanordnung stabilisiert die Betonplatte 3 und erhöht den Durchstanzwiderstand.

Der den ersten Bereich 9 bildende sogenannte Durchstanzkegel oder Sockel bildet mit seiner Mantelfläche 15 (gestrichelt dargestellt) einen Winkel α von etwa 30 bis 45° zu der Ebene, in welcher die Betonplatte 3 verläuft. Die Durchstanzsicherung funktioniert dadurch, dass mehrere Ankerelemente 13 den ersten Bereich 9 und den zweiten Bereich 11 miteinander koppeln. Dazu werden die Ankerelemente 13 kranz- oder strahlenförmig, in mehreren Ringen (Fig. 2 linke Hälfte) oder auch orthogonal orientiert (Fig. 2 rechte Hälfte) von der Stütze 5 ausgehend angeordnet. Die Ankerelemente 13 können dabei senkrecht in die Betonplatte 3 eingesetzt werden (Fig. 1 linke Hälfte) oder in einem Winkel, so dass sie die Mantelfläche 15 etwa senkrecht durchsetzen (Fig. 1 rechte Hälfte).

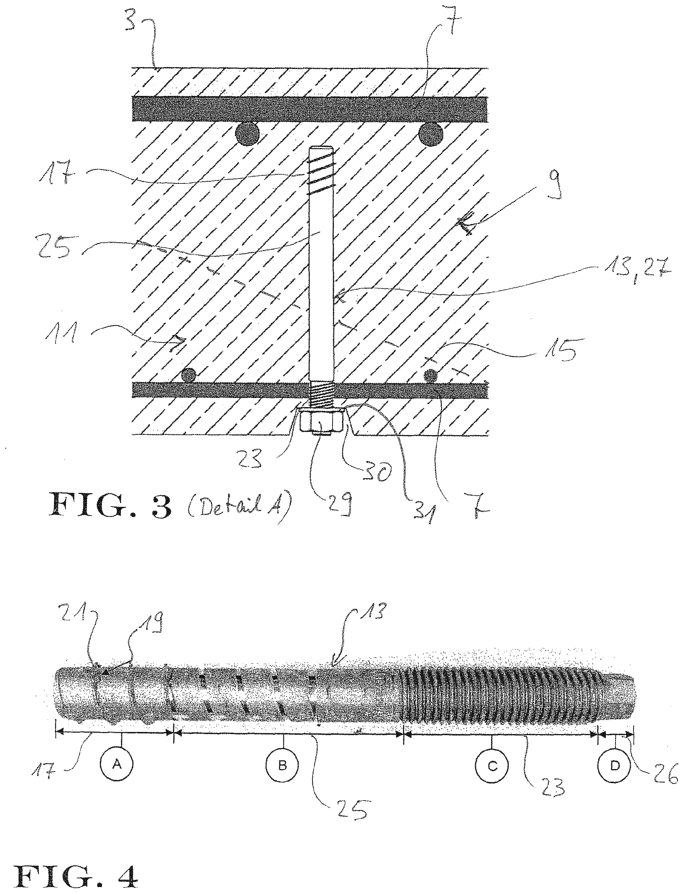

Fig. 3 zeigt ein eingebautes Ankerelement 13 in vergrößerter Darstellung im eingebauten Zustand (Detail A aus Fig. 1). Der Aufbau des Ankerelements 13 ist in Fig. 4 erkennbar. Das stabförmige Ankerelement 13 weist an seinem vorderen Ende einen Gewindeabschnitt 17 auf, der mit einem selbstschneidenden Außengewinde 19 versehen ist, das in seinem vorderen Bereich zusätzliche Schneidelemente 21 aufweist, die beispielsweise als Schweißpunkte aus einem besonders harten Werkstoff ausgebildet sind. Am hinteren Ende weist das Ankerelement einen Anschlussabschnitt 23 auf, der als metrisches Normgewinde ausgebildet ist.

Gewindeabschnitt 17 und Anschlussabschnitt 23 sind über den gewindefreien Schaftbereich 25 miteinander verbunden. An dem Anschlussabschnitt 23 angrenzend weist das Ankerelement 13 einen Sechskantkopf 26 auf, der als Drehmomentübertragungsmittel dient und zum Einschrauben des Ankerelements in eine entsprechende Bohrung dient.

In eingebautem Zustand (Fig. 3) verläuft das Ankerelement 13 in einer den ersten und zweiten Bereich 9, 11 der Betonplatte 3 durchsetzenden Bohrung 27, die bis in den Wirkbereich einer Bewehrung 7 an der Oberseite der Betonplatte 3 reicht. Der Wirkbereich umfasst etwa eine Schicht, die zwischen den zwei Ebenen verläuft, die als Grenzebenen die Unter- und Oberseite einer Bewehrungslage definieren. Der Wirkbereich kann dabei auch Bereiche (Schichten) umfassen, die jeweils unterhalb und oberhalb dieser Ebenen verlaufen. Das Ankerelement 13 wird mittels des Sechskantkopfs 26 vollständig in die Bohrung 27 eingeschraubt, so dass der Gewindeabschnitt 17 vollständig in dem im ersten Bereich 9 verlaufenden Abschnitt der Bohrung 27 liegt. Auf das hintere Gewinde (den Anschlussabschnitt 23) wird eine als Koppeleinrichtung dienende Spannmutter 29 aufgeschraubt, die sich über eine Unterlegschreibe 31 an der Oberfläche (Unterseite der Platte 3) des zweiten Bereichs 11 abstützt. Im dargestellten Ausführungsbeispiel verlaufen Spannmutter 29 und Unterlegschreibe 31 in einem abgesenkten Bereich 30. Je nach Höhe des Schraubmoments, mit dem die Spannmutter 29 angezogen wird, baut diese eine Zugspannung im Schaftabschnitt 25 auf, der den ersten Bereich 9 und den zweiten Bereich 11 zusammendrückt.

Es gibt auch Anordnungen, bei denen die Ankerelemente 13 ohne Vorspannung eingebaut werden. Die Zugspannung im Ankerelement 13 entsteht dann durch Rissbildung oder Verformungsverhalten im durchstanzgefährdeten Bereich.

Dadurch, dass mehrere Ankerelemente die Mantelfläche 15 durchsetzend angeordnet sind, wird auch bei hohen Belastungen verhindert, dass der Durchstanzkegel (erster Bereich 9) aus der Betonplatte 3 herausgestanzt wird.

Die Verbindungsanordnung kann nachträglich von der Unter- oder Oberseite der Betonplatte 3 eingesetzt ist, d. h. es ist möglich, vorhandene Betonplatten 3 bzw. daraus gebildete Bauwerksdecken "im laufenden Betrieb" nachträglich zu verstärken, ohne dass dazu Kleber oder ähnliches verwendet werden müssten, die bei hohen Temperaturen, also im Brandfall, ihre Tragfähigkeit verlieren.

Es gibt jedoch Ausführungen, bei denen nachträglich ein Zwischenraum zwischen Ankerelement 13 und der Bohrung 28 mit einem geeigneten Verfüllmaterial (z.B. Epoxidharz, Zementkleber etc.) ausgefüllt wird. Dies erhöht die Tragfähigkeit zusätzlich. Bei Verlust der Tragfähigkeit des Verfüllmaterials bleibt jedoch die durch den Formschluss zwischen Ankerelement 13 und Betonmatrix bedingte Tragfähigkeit bestehen.

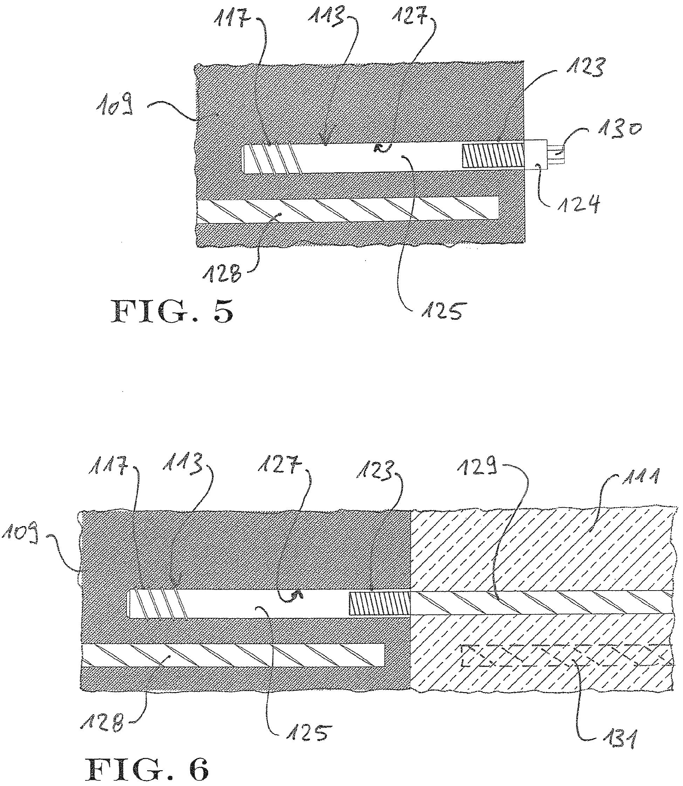

Die Fig. 5 und Fig. 6 zeigen eine nicht erfindungsgemäße Verbindungsanordnung, bei der ein Ankerelement 113 vorgesehen ist, das mit einem Gewindeabschnitt 117 in eine Bohrung 127 in ein Betonbauteil 109 eingeschraubt ist, das einen ersten Bereich bildet. Die Bohrung 127 verläuft dabei in der Nähe eines als Bewehrungsstab 128 ausgebildeten ersten Armierungselements. (Es gibt auch Ausführungen ohne ein solches Armierungselement 128.) An seinem hinteren Ende weist das Ankerelement 113 einen Anschlussabschnitt 123 auf (hier ein mit einem Innengewinde versehenes Sackloch). Zum Einschrauben des Ankerelements 113 in den ersten Bereich (Betonbauteil 109) wird in den Anschlussabschnitt 123 ein Anschlussstück 124 eingeschraubt, das mit einem Sechskantkopf 130 versehen ist, der als Drehmomentübertragungsmittel dient. Damit kann das Ankerelement 113 vollständig in die Bohrung 127 eingeschraubt werden kann (Fig. 5). Anschließend wird das Anschlussstück 129 wieder entfernt.

Zur vollständigen Herstellung der Verbindungsanordnung (siehe Fig. 6) dient das als Koppeleinrichtung dienende Armierungsstück 129, das an seinem vorderen Ende ein Außengewinde aufweist, welches zum Innengewinde im Anschlussabschnitt 123 passt. Die Koppeleinrichtung 129 kann so über ihr Gewinde fest und insbesondere auch zugfest mit dem Ankerelement 113 verbunden werden.

Das zunächst aus dem ersten Bereich 109 herausstehende Armierungsstück (Koppeleinrichtung 129) wird dann von einer ein zweites, ggf. armiertes Betonbauteil 111 (zweiter Bereich) bildenden Betonmasse umformt. Dieses Armierungsstück bildet die neue Armierung im zweiten Betonbauteil 111 , ggf. zusammen mit einem zweiten Armierungselement 131.

Die Koppeleinrichtung 129 verläuft dabei an dem zweiten Armierungselement 131 entlang und kann so insbesondere Zuglasten aus dem ersten Armierungselement 128 im ersten Bereich 109 über das Ankerelement 113 und die Koppeleinrichtung 129 in das zweite Armierungselement 131 im zweiten Bereich 111 übertragen, so dass zwischen erstem und zweitem Bereich 109, 111 ein wirksamer, einfach herstellbarer Bewehrungsanschluss besteht, der auch für die nachträgliche Kopplung von unterschiedlichen Betonbauteilen (erster und zweiter Bereich) geeignet ist.

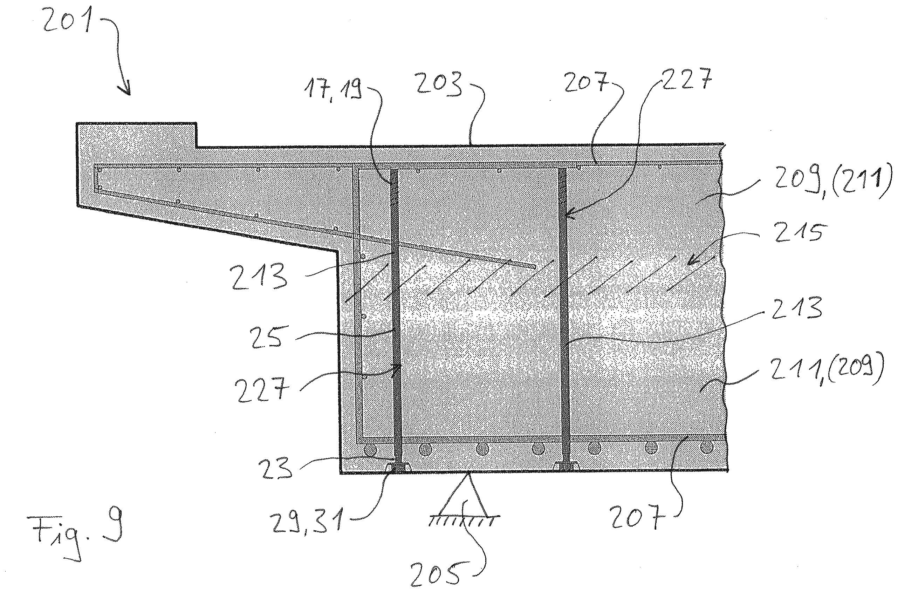

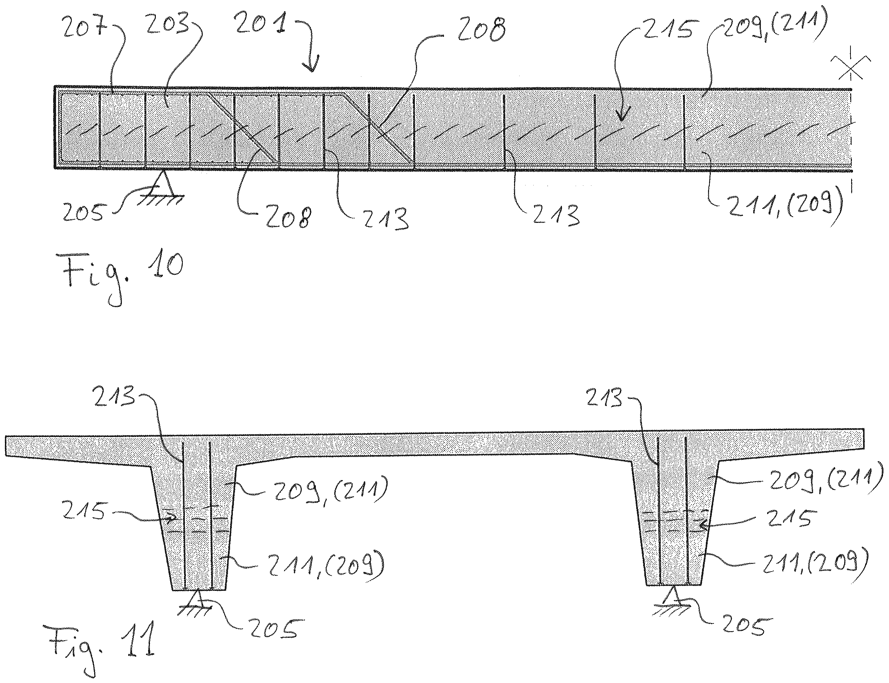

Eine erfindungsgemäße Verbindungsanordnung wird nachfolgend anhand der Figuren 9 bis 11 erläutert. Figur 9 zeigt einen Querschnittsdetail einer Plattenbrücke 201, bei der ein die Plattenbrücke 201 bildender Betonträger 203 auf mehreren Lagerpunkten 2095 ruht (vergleiche Figur 9 und Figur 10). Der Betonträger 203 ist jeweils an seiner Unter- und Oberseite mit einer Bewehrung 207 versehen, welche die auftretenden Zugspannungen aufnimmt. Diese Bewehrung 207 ist belastungsangepasst ausgeführt und kann in den Bereichen, in denen keine Zuglasten auftreten, auch ganz weggelassen werden. Durch das Eigengewicht des Betonträgers 203 und zusätzliche Verkehrslasten entstehen an der Ober- bzw. Unterseite des Betonträgers 203 Druck- und Zugspannungen. Diese rufen Querkräfte hervor, die im dazwischenliegenden Bereich (Schubzone 215) zu Schubspannungen in der Betonmatrix führen. Zur Aufnahme dieser Querkräfte sind das Profil des Betonträgers 203 durchsetzende Querkraftarmierungen 208 vorgesehen, die verhindern, dass der Betonträger 203 in der Schubzone 215 versagt, indem sie die Querkräfte aufnehmen.

Sind diese Querkraftarmierungen 208 nicht ausreichend oder geschwächt, so können die auftretenden Querkräfte zu diagonal verlaufenden Rissen in der Schubzone 215 führen, die einen ersten Bereich 209 an der Oberseite von einem zweiten Bereich 211 an der Unterseite voneinander trennen und letztendlich zum Bauteilversagen führen.

Um dies zu vermeiden, sind die als Querkraftverstärkung dienenden Ankerelemente 213 den Betonträger 203 durchsetzend angebracht. Die Ankerelemente 213 werden so in dem Betonträger 203 verteilt, dass sie die auftretenden Querkräfte optimal aufnehmen. D. h. in Bereichen mit höheren Querkräften ist die Dichte der Ankerelemente 213 höher als in solchen mit geringeren erwarteten Querkräften (vergl. Figur 10). Die Wirkung der Ankerelemente 213 ist die gleiche, wie die im Zusammenhang mit den Figuren 1 bis 4 beschriebene. Sie koppeln den ersten Bereich 209 mit dem zweiten Bereich 211 und verhindern, dass die Betonmatrix in der Schubzone 215 geschädigt oder zerstört wird, indem sie eine eventuell bereits vorhandene Querkraftarmierung 208 verstärken oder ersetzen bzw. ein bisher nicht querkraftbewehrtes Bauteil verstärken. Die Ankerelemente 213 sind auf einfache Weise von der Unterseite des Betonträgers 203 her einzusetzen, und schädigen die Witterungseinflüssen ausgesetzte Oberseite nicht. Die Ankerelemente 213 weisen die gleichen Elemente wie die in Fig. 3 und 4 dargestellten Elemente 13 auf und verlaufen in entsprechenden Bohrungen 227 in der Betonmatrix.

Es gibt auch Ausführungen, bei denen die Ankerelemente 213 von der Oberseite eingesetzt werden, z. B. um eventuell an der Unterseite vorhandene Installationen (abgehängte Decken, Leitungen, etc.) nicht demontieren zu müssen. Je nach Montagerichtung der Ankerelemente 213 sind dann auch der erste und zweite Bereich miteinander vertauscht (vgl. die in Klammern eingetragenen Bezugszeichen 209 und 211).

Fig. 11 zeigt eine analoge Anordnung in einem Plattenbalkenquerschnitt.

Die in den Figuren 9 bis 11 dargestellten Ankerelemente verlaufen senkrecht zur Schubzone 215 und durchsetzen evtl. vorhandene oder auftretende Risse in einem Winkel von etwa 45°. Es gibt auch Ausführungen, bei denen diese Ankerelemente die Schubzone in einem Winkel von 45° und die Risse senkrecht durchsetzen (vgl. Fig. 11). Dadurch kann die Tragfähigkeit weiter verbessert werden. Es gibt auch hier Ausführungen, bei denen zusätzlich zum Ankerelement 213 Verfüllmaterial in die Bohrung 227 eingebracht wird.

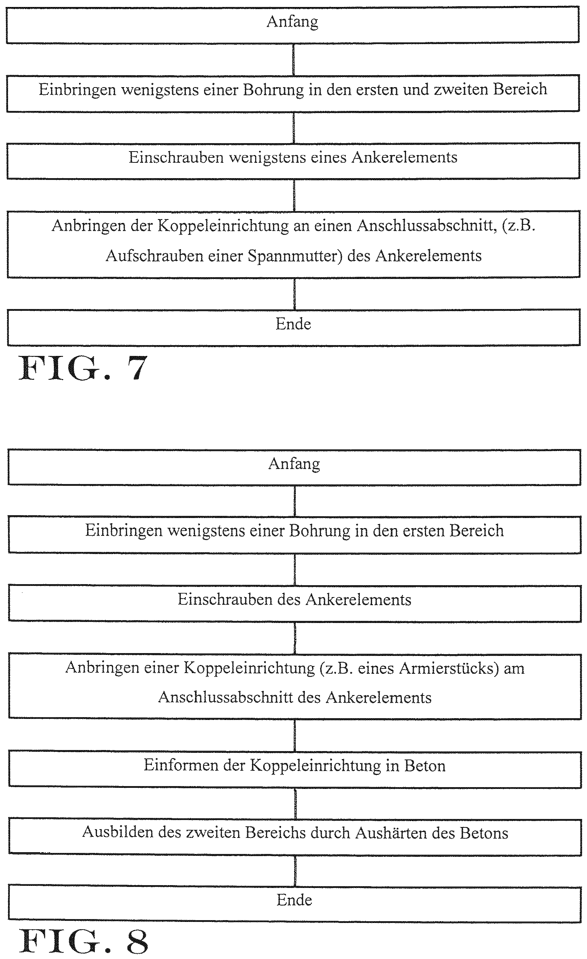

Das in Fig. 7 dargestellte Verfahren zur Herstellung einer Durchstanzsicherung umfasst folgende Schritte:
- Einbringen der Bohrungen 27 in den ersten und zweiten Bereich 9, 11 um eine Stütze 5 herum,
- Einschrauben des oder der Ankerelemente 13, so dass deren Gewindeabschnitte 17 vollständig im ersten Bereich 9 bzw. im sogenannten Durchstanzsockel verlaufen,
- Anbringen der Koppeleinrichtung 29 am Anschlussabschnitt 23 (z. B. Aufschrauben einer Spannmutter), um eine Zugspannung im Ankerelement 13 zwischen Gewindeabschnitt 17 und Anschlussabschnitt 23 aufzubauen und so den ersten und zweiten Bereich 9, 11 zusammenzufügen.

Zusätzlich kann das Verfahren noch folgende optionale Schritte umfassen:
- Suchen und Kennzeichnen der in der Betonplatte 3 vorhandenen Bewehrung 7,
- Festlegen und Markieren möglicher Setzpunkte für die Ankerelemente 13 (Bohrlöcher 27) derart, dass die vorhandene Bewehrung 7 möglichst unverletzt bleibt bzw. deren Tragfähigkeit mit nutzbar wird,
- Säubern der Bohrlöcher 27,
- Einbringen von Vertiefungen/Absenkungen 30 im Bereich der Bohrlöcher 27,
- Verschließen der Vertiefungen 30 und Abdecken der dort angeordneten Koppeleinrichtung 29.

Das oben geschilderte Verfahren gilt entsprechend für die Ankerelemente 213 in den in Fig. 9 bis 11 dargestellten Ausführungsbeispielen

Das in Fig. 8 dargestellte Verfahren zur Herstellung eines Bewehrungsanschlusses umfasst die Schritte:
- Einbringen wenigstens einer Bohrung 127 in den ersten Bereich 109 (zum Beispiel eines ersten Betonbauteils),
- Einschrauben des Ankerelements 113 in das erste Betonbauteil 109,
- Anbringen eines Armierstücks 129 am Anschlussabschnitt 123 des Ankerelements 117 (z. B. über eine geeignete Gewindeanordnung),
- Einformen der Koppeleinrichtung (des Armierstücks 129) in eine Betonmasse, die ein zweites Betonbauteil 111 bildet, welches den zweiten Bereich darstellt,
- Aushärten des Betons.

Das Verfahren kann um weitere optionale Schritte erweitert werden, wie:
- Festlegen der Setzpunkte, derart, dass die Bohrungen im Winkelbereich vorhandener Armierungen 128 im ersten Betonbauteil verlaufen,
- Anbringen von Bewehrungselementen 131 im Bereich der Koppeleinrichtung 129 (Armierungsstück), so dass diese im zweiten Bereich (zweites Betonbauteil) lastübertragend zusammenwirken.

Weitere Variationen der vorliegenden Erfindung ergeben sich für den Fachmann im Rahmen der nachfolgenden Patentansprüche.

## Patentansprüche

1. Querkraftverstärkte Verbindungsanordnung (201) umfassend
a. einen Betonträger (203) mit
i. einer Oberseite,
ii. einer Unterseite,
iii. einem an der Oberseite oder an der Unterseite angeordneten ersten Bereich (209) mit Druckspannungen,
iv. einem an der Unterseite oder an der Oberseite angeordneten zweiten Bereich (211) mit Zugspannungen,
v. einer zwischen dem ersten Bereich (209) und dem zweitem Bereich (211) angeordneten Schubzone (215) und
vi. mindestens einer Bohrung (227), die sich von der Oberseite aus oder von der Unterseite aus erstreckt,
b. ein in der mindestens einen Bohrung (227) verlaufendes Ankerelement (213) als Querkraftverstärkung,
c. wobei das Ankerelement (213) den ersten Bereich (209) mit dem zweiten Bereich (211) verbindet, wobei das Ankerelement (213)
- an einem hinteren Ende einen Anschlussabschnitt (23) aufweist,
- einen zwischen dem Gewindeabschnitt (217) und dem Anschlussabschnitt (23) verlaufenden gewindefreien Schaftabschnitt (25) aufweist,
- eine an dem Anschlussabschnitt (23) fixierbare Koppeleinrichtung (29) aufweist, die an dem zweiten Bereich (211) angreift und die eine Spannmutter (29) und eine Unterlegscheibe (31) aufweist,
**dadurch gekennzeichnet, dass** das Ankerelement (213) an einem vorderen Ende einen Gewindeabschnitt (17) mit einem selbstschneidenden Außengewinde (19) aufweist, wobei der Gewindeabschnitt (17) in die Bohrung (227) eingeschraubt ist.

2. Querkraftverstärkte Verbindungsanordnung (201) nach Anspruch 1, **dadurch gekennzeichnet, dass** die Oberseite und/oder die Unterseite im Wesentlichen horizontal, insbesondere horizontal, orientiert ist.

3. Querkraftverstärkte Verbindungsanordnung (201) nach einem der vorstehenden Ansprüche, **dadurch gekennzeichnet, dass** mehrere Bohrungen (227) mit Ankerelementen (213) vorgesehen sind, wobei die Dichte der Ankerelemente (213) in Abhängigkeit erwarteter Querkräfte festlegbar ist, wobei insbesondere die Dichte der Ankerelemente proportional zur Größe der erwarteten Querkräfte ist.

4. Querkraftverstärkte Verbindungsanordnung (201) nach einem der vorstehenden Ansprüche, **dadurch gekennzeichnet, dass** das Ankerelement (213) den Betonträger (203) durchsetzt.

5. Querkraftverstärkte Verbindungsanordnung (201) einem der vorstehenden Ansprüche, **dadurch gekennzeichnet, dass** das Außengewinde (19) Schneidelemente (21) aufweist, die insbesondere als Schweißpunkte aus besonders hartem Werkstoff ausgeführt sind.

6. Querkraftverstärkte Verbindungsanordnung (201) nach einem der vorstehenden Ansprüche, **dadurch gekennzeichnet, dass** der Anschlussabschnitt (23) als metrisches Außengewinde ausgeführt ist.

7. Querkraftverstärkte Verbindungsanordnung (201) nach Anspruch 6, **dadurch gekennzeichnet, dass** angrenzend zu dem Anschlussabschnitt (23) ein Drehmomentübertragungsmittel (26) vorgesehen ist, das insbesondere als Sechskantkopf ausgeführt ist.

8. Querkraftverstärkte Verbindungsanordnung (201) nach einem der vorstehenden Ansprüche, **dadurch gekennzeichnet, dass** der Betonträger (203) auf mehreren Lagerpunkten (205) ruht.

9. Querkraftverstärkte Verbindungsanordnung (201) nach einem der vorstehenden Ansprüche, **dadurch gekennzeichnet, dass** der Betonträger (203) an der Oberseite und/oder an der Unterseite eine Bewehrung (207) zum Aufnehmen auftretender Zugspannungen aufweist.

10. Querkraftverstärkte Verbindungsanordnung (201) nach einem der vorstehenden Ansprüche, **dadurch gekennzeichnet, dass** der Betonträger (203) zum Aufnehmen in der Schubzone (215) auftretender Querkräfte Querkraftarmierungen (208) aufweist.

11. Querkraftverstärkte Verbindungsanordnung (201) nach einem der vorstehenden Ansprüche, **dadurch gekennzeichnet, dass** das Ankerelement (213) von der Unterseite oder von der Oberseite in die Bohrung (227) eingesetzt ist.

12. Querkraftverstärkte Verbindungsanordnung (201) nach einem der vorstehenden Ansprüche, **dadurch gekennzeichnet, dass** der Betonträger (203) als Plattenbrücke oder als Plattenbalken ausgeführt ist.

13. Querkraftverstärkte Verbindungsanordnung (201) nach einem der vorstehenden Ansprüche, **dadurch gekennzeichnet, dass** die Ankerelemente (213) unter einem Neigungswinkel zu der Schubzone (215), insbesondere senkrecht oder unter einem 45°-Winkel, orientiert sind, insbesondere unter einem 45°-Winkel oder senkrecht zu auftretenden Rissen angeordnet sind.

## Claims

1. Transverse-force reinforced connecting assembly (21) comprising
a. a concrete beam (203) with
i. an upper side,
ii. a lower side,
iii. a first region (209) with compressive stresses, the first region being arranged on the upper side or on the lower side,
iv. a second region (211) with tensile stresses, the second region being arranged on the lower side or on the upper side,
v. a shear zone (215) arranged between the first region (209) and the second region (211), and
vi. at least one borehole (227) extending from the upper side or from the lower side,
b. an anchoring member (213) acting as a transverse-force reinforcement member and running in the at least one borehole (227),
c. wherein the anchoring member (213) interconnects the first region (209) and the second region (211), the anchoring element (213) having
- a connecting portion (23) at a rear end,
- a non-threaded shank portion (25) extending between a threaded portion (217) and the connecting portion (33),
- a coupling device (29) fixable to the connecting portion (23), the coupling device (29) engaging the second region (211) and having a clamping nut (29) and a washer (31),
**characterized in that** the anchoring member (213) has, at a front end, a threaded portion (17) with a self-tapping external thread (19), the threaded portion (17) being screwed in the borehole (227).

2. Transverse-force reinforced connecting assembly (201) as claimed in claim 1, **characterized in that** the upper side and/or the lower side is oriented substantially horizontally, in particular horizontally.

3. Transverse-force reinforced connecting assembly (201) as claimed in any one of the preceding claims, **characterized in that** a plurality of bores (227) is provided with anchoring members (213), wherein the density of the anchoring members (213) is pre-definable according to expected transverse forces, wherein in particular the density of the anchoring members is proportional to the magnitude of the expected transverse forces.

4. Transverse-force reinforced connecting assembly (201) as claimed in any one of the preceding claims, **characterized in that** the anchoring member (213) passes through the concrete beam (203).

5. Transverse-force reinforced connecting assembly (201) as claimed in any one of the preceding claims, **characterized in that** the external thread (19) has tapping members (21), which are in particular configured as weld spots made of a particularly hard material.

6. Transverse-force reinforced connecting assembly (201) as claimed in any one of the preceding claims, **characterized in that** the connecting portion (23) is configured as a metric external thread.

7. Transverse-force reinforced connecting assembly (201) as claimed in claim 6, **characterized in that** a torque transmission means (26) is provided adjacent to the connecting portion (23), the torque transmission means (26) in particular being configured as a hexagon head.

8. Transverse-force reinforced connecting assembly (201) as claimed in any one of the preceding claims, **characterized in that** the concrete beam (203) rests on a plurality of support points (205).

9. Transverse-force reinforced connecting assembly (201) as claimed in any one of the preceding claims, **characterized in that** the concrete beam (203) has, on the upper side and/or on the lower side, a reinforcement (207) configured to absorb occurring tensile stresses.

10. Transverse-force reinforced connecting assembly (201) as claimed in any one of the preceding claims, **characterized in that** the concrete beam (203) has transverse-force reinforcements (208) configured to absorb transverse forces occurring in the shear zone (215).

11. Transverse-force reinforced connecting assembly (201) as claimed in any one of the preceding claims, **characterized in that** the anchoring member (213) is inserted in the borehole (227) from the lower side or from the upper side.

12. Transverse-force reinforced connecting assembly (201) as claimed in any one of the preceding claims, **characterized in that** the concrete beam (203) is configured as a slab bridge or a slab beam.

13. Transverse-force reinforced connecting assembly (201) as claimed in any one of the preceding claims, **characterized in that** the anchoring members (213) are oriented at an inclination angle, in particular perpendicular or at a 45° angle, to the shear zone (215), and are arranged in particular at a 45° angle or perpendicular to occurring cracks.

## Revendications

1. Dispositif de liaison (201), renforcé contre des forces transversales, comprenant
a. un support en béton (203) pourvu
i. d'un côté supérieur
ii. d'un côté inférieur,
iii. d'une première région (209) disposée au niveau du côté supérieur ou du côté inférieur et présentant des contraintes de compression,
iv. d'une deuxième région (211) disposée au niveau du côté supérieur ou du côté inférieur et présentant des contraintes de traction,
v. d'une zone de cisaillement (215) disposée entre la première région (209) et la deuxième région (211) et
vi. d'au moins un alésage (227) qui s'étend depuis le côté supérieur ou depuis le côté inférieur,
b. un élément d'ancrage (213) s'étendant dans l'au moins un alésage (227) et servant de renforcement contre des forces transversales,
c. l'élément d'ancrage (213) reliant la première région (209) à la deuxième région (211),
l'élément d'ancrage (213) comportant
- à une extrémité arrière une section de raccordement (23),
- une section formant tige non filetée (25) s'étendant entre la section filetée (217) et la section de raccordement (23),
- un moyen d'accouplement (29), pouvant être fixé à la section de raccordement (23), qui agit sur la deuxième région (211) et qui comporte un écrou de serrage (29) et une rondelle (31),
**caractérisé en ce que** l'élément d'ancrage (213) comporte à une extrémité avant une section filetée (17) pourvue d'un filetage extérieur auto-taraudant (19), la section filetée (17) étant vissée dans l'alésage (227).

2. Dispositif de liaison (201) renforcé contre des forces transversales selon la revendication 1, **caractérisé en ce que** le côté supérieur et/ou le côté inférieur sont orientés sensiblement horizontalement, en particulier sont orientés horizontalement.

3. Dispositif de liaison (201) renforcé contre des forces transversales selon l'une des revendications précédentes, **caractérisé en ce qu'**il est prévu plusieurs alésages (227) pourvus d'éléments d'ancrage (213), la densité des éléments d'ancrage (213) pouvant être déterminée en fonction des forces transversales attendues, en particulier, la densité des éléments d'ancrage étant proportionnelle à l'intensité des forces transversales attendues.

4. Dispositif de liaison (201) renforcé contre des forces transversales selon l'une quelconque des revendications précédentes, **caractérisé en ce que** l'élément d'ancrage (213) traverse le support en béton (203).

5. Dispositif de liaison (201) renforcé contre des forces transversales selon l'une des revendications précédentes, **caractérisé en ce que** le filetage extérieur (19) comporte des éléments coupants (21) qui sont réalisés notamment sous la forme de points de soudure en matière particulièrement dure.

6. Dispositif de liaison (201) renforcé contre des forces transversales selon l'une des revendications précédentes, **caractérisé en ce que** la section de raccordement (23) est conçue comme un filetage extérieur métrique.

7. Dispositif de liaison (201) renforcé contre des forces transversales selon la revendication 6, **caractérisé en ce qu'**un moyen de transmission de couple (26), qui est réalisé en particulier sous la forme d'une tête hexagonale, est prévu de manière adjacente à la section de raccordement (23).

8. Dispositif de liaison (201) renforcé contre des forces transversales selon l'une des revendications précédentes, **caractérisé en ce que** le support en béton (203) repose sur plusieurs points d'appui (205).

9. Dispositif de liaison (201) renforcé contre des forces transversales selon l'une des revendications précédentes, **caractérisé en ce que** le support en béton (203) comporte au niveau du côté supérieur et/ou du côté inférieur une armature (207) destinée à absorber les contraintes de traction.

10. Dispositif de liaison (201) renforcé contre des forces transversales selon l'une des revendications précédentes, **caractérisé en ce que** le support en béton (203) comporte des armatures antiforces transversales (208) destinées à absorber des forces transversales apparaissant dans la zone de cisaillement (215).

11. Dispositif de liaison (201) renforcé contre des forces transversales selon l'une des revendications précédentes, **caractérisé en ce que** l'élément d'ancrage (213) est inséré dans l'alésage (227) depuis le côté inférieur ou depuis le côté supérieur.

12. Dispositif de liaison (201) renforcé contre des forces transversales selon l'une des revendications précédentes, **caractérisé en ce que** le support en béton (203) est réalisé sous la forme d'une plaque formant pont ou d'une plaque formant poutre.

13. Dispositif de liaison (201) renforcé contre des forces transversales selon l'une des revendications précédentes, **caractérisé en ce que** les éléments d'ancrage (213) sont orientés avec un angle d'inclinaison par rapport à la zone de cisaillement (215), en particulier perpendiculairement ou avec un angle de 45°, en particulier avec un angle de 45°, ou perpendiculairement à des fissures générées.
